(19) **Europäisches Patentamt**
**European Patent Office**
**Office européen des brevets**

(11) **EP 1 788 697 B1**

(12) **FASCICULE DE BREVET EUROPEEN**

(45) Date de publication et mention
de la délivrance du brevet:
**06.10.2010 Bulletin 2010/40**

(51) Int Cl.:
*H02M 7/44* (2006.01)      *H02M 5/42* (2006.01)
*H02M 5/458* (2006.01)      *H02P 27/06* (2006.01)
*H02P 27/02* (2006.01)

(21) Numéro de dépôt: **06123658.4**

(22) Date de dépôt: **08.11.2006**

(54) **Dispositif de correction de facteur de puissance pour variateur de vitesse**

Gerät zur Korrektur des Leistungsfaktors für einen drehzahlgeregelten Antrieb

Power-factor correction device for variable speed drive

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **22.11.2005 FR 0553546**

(43) Date de publication de la demande:
**23.05.2007 Bulletin 2007/21**

(73) Titulaire: **Schneider Toshiba Inverter Europe SAS
27120 Pacy sur Eure (FR)**

(72) Inventeur: **Grbovic, Petar
27200, VERNON (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
• REDDIG, M.: "Optimization of the input and output stages in high efficiency power supplies" 2003 IEEE INTERNATIONAL CONFERENCE ON INDUSTRIAL TECHNOLOGY, vol. 2, 10 décembre 2003 (2003-12-10), - 12 décembre 2003 (2003-12-12) pages 1190-1195, XP002401581
• CONSOLI, A.; CACCIATO, M.; TESTA, A.; GENNARO, F.: "Single chip integration for motor drive converters with power factor capability" IEEE TRANSACTIONS ON POWER ELECTRONICS, vol. 19, no. 6, novembre 2004 (2004-11), pages 1373-1379, XP002401582
• ZHIGAN WU; ZHOU GENFU; JIANPING YING;: "Line adaptive PAM & PWM drive for BLDCM" IPEMC 2004, vol. 3, 14 août 2004 (2004-08-14), - 16 août 2004 (2004-08-16) pages 1263-1267, XP002401583

# Description

La présente invention se rapporte en général au domaine des variateurs de vitesse du type convertisseurs de fréquence destinés à la commande de moteurs électriques, et en particulier à un dispositif de correction de facteur de puissance monophasé et à son circuit de commande, intégré dans un variateur de vitesse de faible puissance.

De façon connue, un variateur de vitesse du type convertisseur de fréquence comporte un redresseur d'entrée qui fournit une tension continue à partir d'un réseau d'alimentation alternatif extérieur et un onduleur à modulation de largeur d'impulsions (MLI ou PWM - Pulse Wide Modulation) qui alimente un moteur alternatif triphasé. Le variateur de vitesse comporte aussi un condensateur de forte capacité qui est relié entre le redresseur d'entrée et l'onduleur PWM. Dans les applications de faible puissance, par exemple jusqu'à une puissance d'environ 2 kW, le variateur de vitesse est souvent alimenté par un réseau d'alimentation électrique alternatif monophasé de 110 V ou 230V.

Le redresseur d'entrée utilise généralement un pont de diodes, qui fournit une tension redressée. La puissance consommée instantanée oscille à une fréquence égale au double de la fréquence d'entrée du réseau d'alimentation alternatif (par exemple 100 ou 120 hertz). Cependant, en sortie du variateur, la charge pilotée par le variateur de vitesse, telle qu'un moteur triphasé, requiert une puissance instantanée constante, sinon une ondulation du couple et des oscillations de vitesse apparaissent dans le moteur.

C'est pourquoi, un important élément de stockage d'énergie est exigé comme ballast entre l'entrée et la sortie du variateur de vitesse. Il est largement répandu d'utiliser un gros condensateur électrolytique ou une série de condensateurs comme élément de stockage. Les diodes du redresseur d'entrée conduisent durant une période courte autour de la tension d'entrée maximale. Donc, le courant d'entrée est une impulsion courte avec une grande amplitude, qui comprend la fréquence fondamentale (par exemple 50 ou 60 hertz) et des harmoniques de fréquences plus élevées. Le courant de pointe peut ainsi être plusieurs fois supérieur à l'amplitude de l'harmonique fondamentale. Un tel courant de pointe produit de nombreux problèmes, tels que la réduction des possibilités du réseau d'alimentation, la surcharge de la ligne de neutre, la surchauffe des transformateurs de distribution, des moteurs, etc... En effet, plus il y a d'harmoniques dans le courant, plus le courant apparent RMS (root mean square) est important pour une même puissance active donnée.

Pour réduire les harmoniques d'entrée et se conformer notamment aux normes IEC 61000, on utilise un circuit de compensation de phase, appelé aussi circuit de correction du facteur de puissance (PFC - Power Factor Correction). Habituellement, les circuits de compensation de phase sont basés sur un circuit élévateur de tension continue qui est placé en sortie du redresseur d'entrée à diodes de façon à délivrer la tension de bus continu. Les circuits de compensation de phase se composent généralement d'un étage de puissance et de deux boucles de commande interconnectées, une boucle lente de régulation de la tension de bus et une boucle de régulation du courant d'entrée à large bande passante. Le régulateur de tension doit permettre de maintenir la tension de bus continu constante et indépendante de la variation de la charge et de la tension d'entrée. La tâche du régulateur de courant d'entrée est de commander le courant instantané d'entrée en fonction du régulateur de tension de bus et d'un profil du courant de référence exigé pour se conformer aux normes (en particulier IEC 61000-3-2 et 61000-3-12).

Le document XP-002401581, "Optimization of the input and output stages in high efficiency power supplies" ICIT 2003, décrit un dispositif comportant un circuit de correction du facteur de puissance.

Selon une première solution, les circuits de commande pour élévateurs à compensation de phase ont longtemps été des circuits entièrement analogiques pour les faibles puissances (voir document US6,373,734). Un tel circuit de commande se compose notamment d'un régulateur de la tension de bus continu, d'un multiplicateur analogique et d'un régulateur de courant analogique.

Le régulateur de courant fournit un ordre au circuit de correction du facteur de puissance. Il peut fonctionner suivant plusieurs modes, tels que par exemple contrôle du courant crête ou moyen à fréquence de découpage constant, temps de conduction constant et fréquence de découpage variable, commande en mode intégral, et commande par hystérésis du courant de pointe. Le multiplicateur analogique reçoit en entrée un signal de mesure de la tension redressée et une consigne de correction venant du régulateur de la tension de bus continu pour délivrer en sortie un courant de référence au régulateur de courant.

Toutes ces opérations de service peuvent être intégrées dans un seul composant. Néanmoins un tel composant est cher et complexe, notamment en raison du multiplicateur à réaliser en technologie analogique.

Une deuxième solution souvent utilisée comporte un dispositif entièrement numérique (ou digital). Toutes les opérations de commande du circuit de correction du facteur de puissance, y compris la régulation de la tension de bus, le calcul du signal de correction et la régulation du courant sont alors réalisées à l'aide d'un microprocesseur. Les performances requises du microprocesseur dépendent de la fréquence de commutation du circuit de compensation de phase ainsi que du temps nécessaire aux autres opérations (par exemple : estimations, calculs, PLL (Phase Lock Loop), etc...). En particulier, la fonction de régulation de courant par modulation de largeur d'impulsions PWM fournissant le signal de pilotage du module PFC du variateur ainsi que la fonction de génération de profil à partir d'une mesure du courant redressé sont des fonctions pouvant être très consommatrices de temps lorsqu'elles sont réalisées en technologie numérique.

Comme les performances requises sont en général assez élevées, une telle solution entièrement numérique nécessite d'employer un processeur de signal numérique de haute performance, en particulier si ce processeur doit également gérer les algorithmes utilisés par le variateur de vitesse pour la commande du moteur. Sinon, l'utilisation d'un microprocesseur supplémentaire dédié pour le circuit de compensation de phase serait également possible, mais cette solution s'avèrerait néanmoins onéreuse.

Le but de l'invention est donc de proposer un dispositif simple et économique de correction de facteur de puissance, adapté à un variateur de vitesse alimenté en monophasé, de façon à être conforme aux normes IEC61000 sur la limitation du niveau de courant d'harmoniques émises.

Pour cela, l'invention décrit un variateur de vitesse pour moteur électrique triphasé, selon la revendication 1, comportant un module redresseur fournissant une tension redressée à partir d'un réseau électrique monophasé alternatif, un module élévateur de tension fournissant une tension de bus régulée à partir de ladite tension redressée, un module onduleur alimenté par ladite tension de bus et fournissant une tension de commande au moteur électrique triphasé à partir d'une consigne de commande et une unité de traitement numérique fournissant ladite consigne de commande. Le variateur de vitesse est caractérisé en ce qu'il comprend un dispositif hybride de correction de facteur de puissance qui pilote le module élévateur de tension et qui comporte un circuit numérique doté d'un module régulateur de tension fournissant un signal de correction à partir d'un signal de mesure de ladite tension de bus et un circuit analogique fournissant un signal de pilotage au module élévateur à partir d'un signal de mesure de ladite tension redressée et à partir dudit signal de correction. Le circuit analogique comporte un circuit limiteur recevant en entrée le signal de mesure de ladite tension redressée et générant en sortie un signal écrêté de forme sensiblement trapézoïdale.

Comme le dispositif de correction de facteur de puissance est de conception hybride, c'est-à-dire en technologie analogique et en technologie numérique (digital), un tel dispositif permet en effet de combiner les avantages des deux technologies, à savoir :

- un circuit numérique capable d'effectuer une boucle de régulation performante de la tension de bus du variateur pour générer un signal de correction régulé converti en PWM (MLI),
- un circuit analogique chargé d'effectuer une boucle de régulation de courant à partir de ce signal de correction PWM et à partir d'un signal de mesure de la tension redressée. Le circuit analogique sert aussi à limiter au préalable de façon simple ce signal de mesure selon une forme déterminée. Le circuit analogique fournit ensuite un signal de pilotage à un commutateur statique du module élévateur de tension du variateur.

Pour optimiser la solution, le circuit numérique est de préférence intégré dans l'unité de traitement du variateur chargée notamment de calculer les boucles de régulation et de commande moteur du variateur de vitesse. On évite ainsi avantageusement l'utilisation d'une unité de traitement spécifique.

D'autres caractéristiques et avantages vont apparaître dans la description détaillée qui suit en se référant à un mode de réalisation donné à titre d'exemple et représenté par les dessins annexés sur lesquels :

- la figure 1 représente un schéma simplifié d'un mode de réalisation d'un variateur de vitesse conforme à l'invention,
- la figure 2 détaille le module élévateur de tension du variateur de vitesse de la figure 1,
- les figures 3 et 4 détaillent respectivement le circuit analogique et le circuit numérique d'un dispositif hybride de correction de facteur de puissance du variateur de vitesse,
- la figure 5 donne un diagramme de signaux circulant dans le dispositif hybride de correction de facteur de puissance,
- la figure 6 détaille un exemple de circuit de commutation du dispositif hybride de correction de facteur de puissance,
- la figure 7 détaille un exemple de circuit limiteur du dispositif hybride de correction de facteur de puissance,
- la figure 8 représente une variante du mode de réalisation de la figure 1.

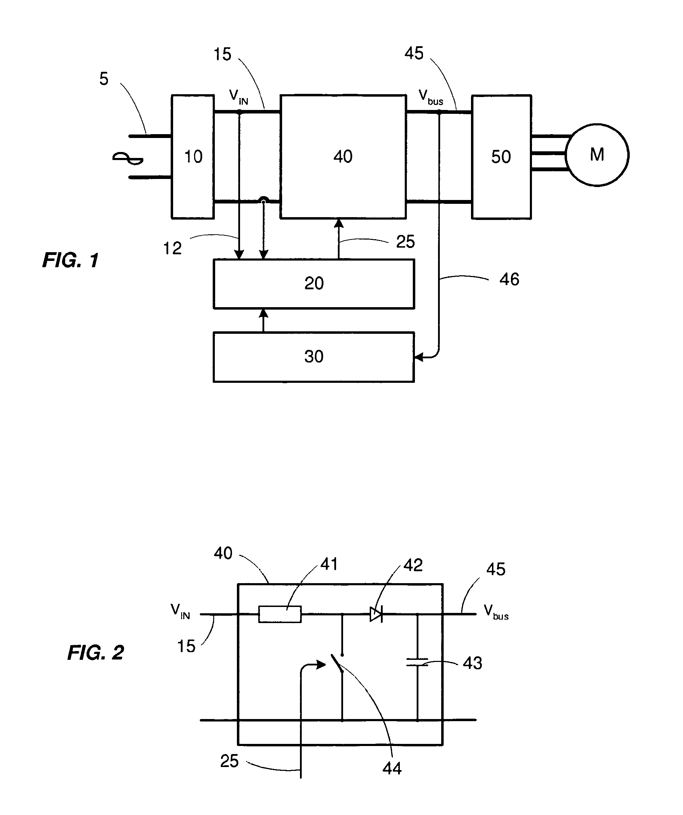

En référence à la figure 1, un variateur de vitesse est destiné au contrôle et à la commande d'un moteur électrique alternatif triphasé M, de type asynchrone. Le variateur de vitesse est alimenté par un réseau électrique alternatif monophasé extérieur 5. Le variateur comprend un module redresseur 10 qui reçoit en entrée le réseau électrique 5 de façon à délivrer en sortie une tension d'entrée $V_{IN}$ redressée 15. Le module redresseur 10 est par exemple composé d'un pont de diodes de type connu, permettant de fournir aisément un signal périodique redressé à partir du réseau alternatif d'entrée 5.

En aval du module redresseur 10, le variateur comprend un module élévateur de tension 40 connecté au module redresseur 10. A partir de la tension redressée $V_{IN}$ 15, le module élévateur 40 est chargé de fournir une tension de bus continu 45 régulée $V_{bus}$.

Le variateur comprend ensuite un module onduleur 50 de type PWM alimenté par la tension de bus $V_{bus}$ 45 régulée et destiné à fournir une tension de commande sur les trois phases du moteur M à partir d'une consigne de commande. Cette consigne de commande provient d'une unité de traitement (non représentée sur les figures) du variateur. Cette unité de traitement est notamment chargée de la gestion de la commande moteur (appelée aussi MCC Motor Control Core) et est basée sur un microcontrôleur, un microprocesseur, un processeur DSP (Digital Signal Processor) ou équivalent.

Comme indiqué dans la figure 2, le module élévateur de tension 40 du variateur de vitesse possède une structure connue qui comporte une inductance 41

(appelé parfois inductance de boost) connectée entre la borne positive de la tension redressée $V_{IN}$ 15 et l'anode d'une diode 42 (diode de boost). La cathode de la diode 42 est reliée à la sortie du module élévateur 40, c'est-à-dire à la borne positive de la tension de bus $V_{bus}$ 45. Un condensateur de bus 43 (par exemple du type condensateur électrolytique) est relié entre la cathode de la diode 42 et la borne négative de la tension de bus $V_{bus}$ 45. Un commutateur 44 (de préférence du type commutateur statique, comme un transistor de puissance) possède une extrémité reliée entre l'inductance 41 et l'anode de la diode 42 et une autre extrémité reliée à la borne négative de la tension redressée $V_{IN}$ 15. Ces deux extrémités sont connectées lorsque le commutateur 44 est fermé et déconnectées lorsque le commutateur 44 est ouvert. Le commutateur 44 est piloté par un signal de pilotage 25 venant d'un dispositif de correction de facteur de puissance du variateur.

Selon l'invention, le dispositif de correction de facteur de puissance du variateur est un circuit hybride, c'est-à-dire réalisé en technologie numérique (digital) et en technologie analogique.

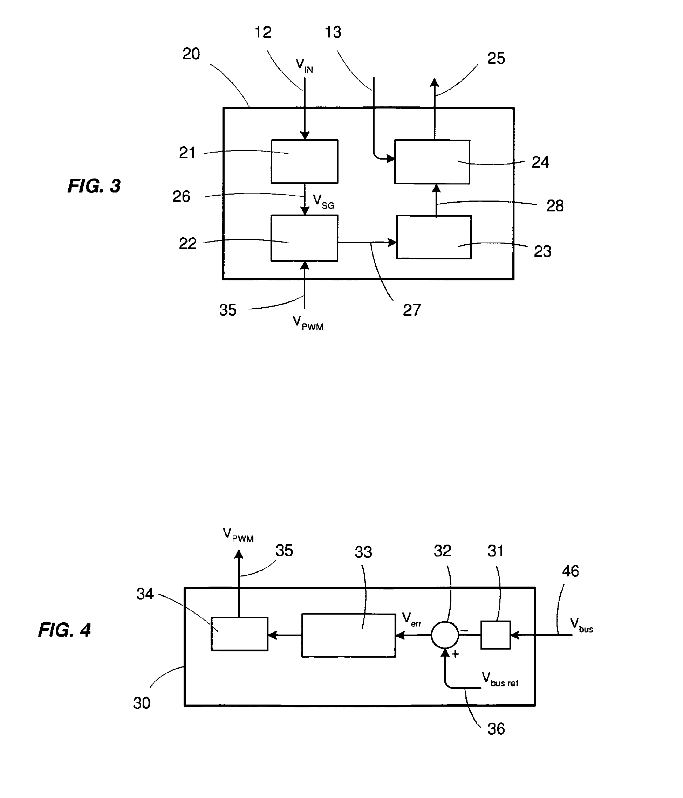

Il comporte donc un premier circuit numérique 30 qui reçoit en entrée un signal de mesure 46 représentatif de la tension de bus $V_{bus}$. Ce signal de mesure 46 peut bien sûr être obtenu à partir de la tension de bus $V_{bus}$ 45 via un pont diviseur non représenté sur les figures. Selon le mode de réalisation de la figure 4, le circuit numérique 30 comprend un convertisseur analogique/ digital 31 relié au signal d'entrée 46. La sortie du convertisseur 31 est reliée à l'une des entrées d'un sommateur 32 dont l'autre entrée reçoit une valeur de consigne 36 de tension de bus $V_{bus\ ref}$. Cette valeur de consigne $V_{bus\ ref}$ peut être générée par l'unité de traitement du variateur par différents moyens non détaillés ici (calcul interne, consigne extérieure, etc...).

La sortie du sommateur 32 fournit donc l'écart entre les signaux 36 et 46, c'est-à-dire un signal $V_{err}$ représentant l'erreur sur la tension de bus. Cet écart $V_{err}$ est reçu par un module régulateur de tension 33 qui délivre en sortie un signal de correction régulé qui permettra de corriger la tension de bus 45. Le signal de correction est ensuite converti en signal de type PWM par un circuit modulateur PWM 34 lequel délivre le signal de correction $V_{PWM}$ 35 comme sortie du circuit numérique 30.

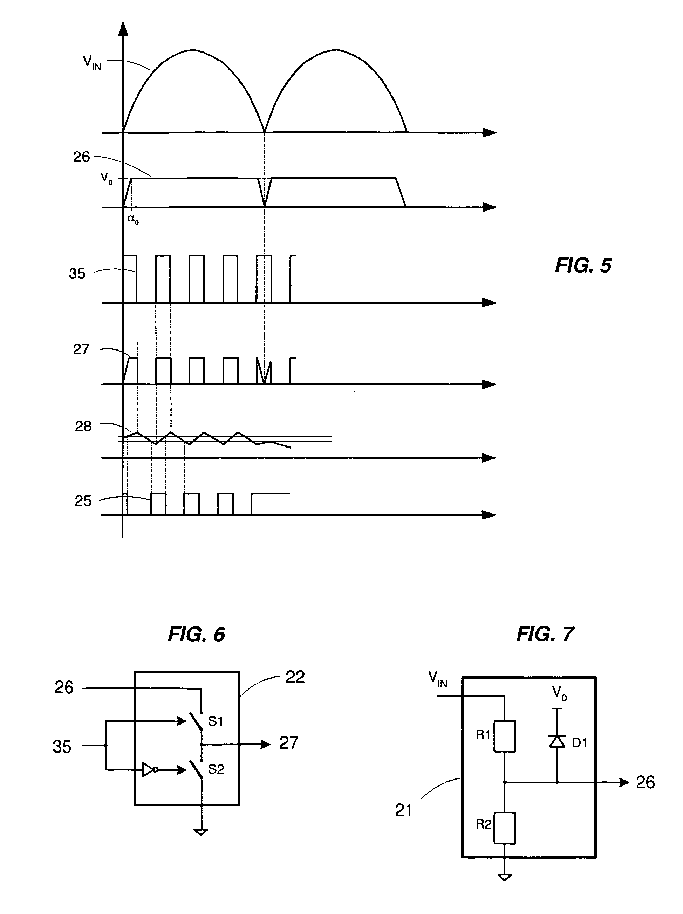

Le dispositif de correction de facteur de puissance comporte également un second circuit analogique 20 qui reçoit en entrée le signal de correction $V_{PWM}$ 35. Selon le mode de réalisation de la figure 3, le circuit analogique 20 comporte un circuit limiteur 21 (appelé aussi Shape Generator) qui reçoit en entrée un signal de mesure 12 représentatif de la tension périodique redressée $V_{IN}$. Ce signal de mesure 12 peut être obtenu à partir de la tension redressée $V_{IN}$ 15 via un pont diviseur non représenté sur les figures. Dans le mode de réalisation préféré, le circuit limiteur 21 a pour fonction de générer le plus simplement possible un signal écrêté $V_{SG}$ 26 dont le profil est sensiblement trapézoïdal, en écrêtant le signal de mesure 12 à une valeur prédéterminée $V_0$ (voir figure 5).

Un exemple de représentation du schéma de principe de fonctionnement du circuit limiteur 21 est donné en figure 7. Le signal d'entrée 12, représentant $V_{IN}$, est relié à un pont diviseur de résistances formé par deux résistances R1 et R2 en série (ou par deux groupes de résistances R1 et R2 en série). Le point milieu du pont diviseur entre les résistances R1 et R2 est raccordé à l'anode d'une diode de limitation D1 dont la cathode est reliée à une source de tension de limitation de valeur $V_0$. Le point milieu du pont diviseur fournit également le signal de sortie $V_{SG}$ 26 de forme trapézoïdale du circuit limiteur 21.

Au démarrage, la valeur du signal périodique $V_{SG}(t)$ progresse avec la valeur du signal périodique $V_{IN}(t)$ avec un ratio (R2/R1+R2), jusqu'à atteindre la valeur $V_0$. Cet instant correspond à un angle $\alpha_0$. Puis, la valeur de $V_{SG}(t)$ reste au niveau de $V_0$ jusqu'à l'instant où $\omega t$ atteint la valeur $(\pi - \alpha_0)$, $\omega$ représentant la fréquence du signal périodique $V_{IN}(t)$. Enfin, à partir de l'instant, $V_{SG}(t)$ suit de nouveau la valeur du signal périodique $V_{IN}(t)$ et le ratio (R2/R1+R2), comme indiqué en figure 5. L'angle $\alpha_0$ représente l'angle du front montant/descendant de $V_{SG}(t)$ et sa valeur dépend du ratio (R2/R1+R2) du pont diviseur. Ainsi :

$$V_{SG}(t) = V_{IN}(t) * (R2/R1+R2)$$

lorsque : $0 <= \omega t < \alpha_0$

$$V_{SG}(t) = V_0$$

lorsque : $\alpha_0 <= \omega t < \pi - \alpha_0$

$$V_{SG}(t) = V_{IN}(t) * (R2/R1+R2)$$

lorsque: $\pi - \alpha_0 <= \omega t < \pi$

Un choix judicieux des valeurs R1 et R2 permet d'optimiser la valeur de l'angle $\alpha_0$. Préférentiellement, un angle $\alpha_0$ compris entre 5° et 30° donne des résultats satisfaisants permettant de minimiser les harmoniques générées par le variateur de vitesse et de pouvoir minimiser ainsi la taille du condensateur de bus 43. Par ailleurs, la forme trapézoïdale du signal écrêté $V_{SG}$ 26 donne de meilleurs résultats qu'une forme sinusoïdale d'amplitude atténuée et est plus simple à réaliser qu'une forme en escalier qui nécessiterait des moyens de traitement numérique consommateurs de temps dans le circuit limiteur 21.

Le circuit analogique 20 comporte ensuite un circuit de commutation 22 (appelé aussi Switching Network) qui reçoit en entrée le signal $V_{SG}$ 26 ainsi que le signal de correction $V_{PWM}$ 35 de façon à générer en sortie un signal 27 (voir figure 5). Un exemple simplifié du schéma de principe de fonctionnement du circuit de commutation 22 est donné en figure 6. Le signal de sortie 27 est commuté alternativement soit vers le signal 26 soit vers le zéro (Ground) en fonction des impulsions provenant du signal 35 grâce à deux commutateurs S1 et S2 actionnés respectivement par le signal 35 et par l'inverse du signal 35.

Le signal de sortie 27 du circuit de commutation 22 est ensuite introduit dans un filtre passe-bas 23 pour donner un signal de référence courant analogique 28. Ce signal 28 représente ainsi le signal de référence courant pour le courant présent en entrée du module élévateur de tension 40.

Le circuit analogique 20 comporte ensuite un régulateur de courant 24 dont une entrée est le signal de référence courant 28 et dont l'autre entrée est un signal de mesure 13 représentatif du courant d'entrée $I_{IN}$ fourni au module élévateur de tension 40. En sortie, le régulateur de courant 24 génère un signal TOR (Tout Ou Rien) de pilotage 25 qui sera appliqué sur la grille du commutateur statique 44 pour ouvrir ou fermer ce commutateur.

Selon un mode de réalisation simple représenté en figure 5, le régulateur de courant 24 peut être un régulateur simple du type à hystérésis délivrant une sortie TOR (Tout Ou Rien), dans lequel :

- lorsque le signal 28 devient supérieur à $I_{IN} + \varepsilon$, alors le signal de pilotage 25 ordonne une fermeture du commutateur 44 de façon à pouvoir augmenter $I_{IN}$, et
- lorsque le signal 28 devient inférieur à $I_{IN} - \varepsilon$, alors le signal de pilotage 25 ordonne une ouverture du commutateur 44, $\varepsilon$ représentant la valeur de l'hystérésis.

L'ordre de pilotage 25 est transmis à la grille du commutateur 44 via un circuit classique de type gate driver, non représenté sur les figures.

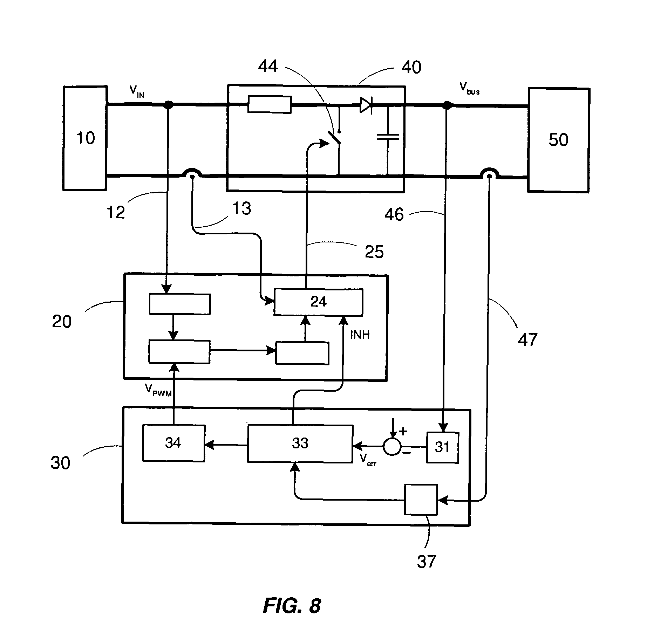

La figure 8 décrit une variante du mode de réalisation de la figure 1 de l'invention dans laquelle on introduit un mode de marche supplémentaire (mode de réserve ou mode stand-by) permettant de forcer l'ouverture du commutateur 44 lorsque le variateur de vitesse ne comporte pas de charge moteur, par exemple en cas de moteur arrêté. Cette fonctionnalité permet notamment de minimiser la consommation d'énergie électrique en évitant de décharger inutilement le condensateur de bus.

Pour cela, un signal de mesure 47 représentatif du courant de charge du variateur est envoyé vers un convertisseur analogique/digital 37 du circuit numérique 30. La sortie du convertisseur 37 est envoyée au module régulateur de tension 33. Dans cette variante, le module 33 effectue donc une fonction supplémentaire de sélection entre deux modes de marche : un mode de marche "normal" correspondant au fonctionnement normal décrit précédemment et un mode de marche "stand-by" dans lequel le module 33 active un signal d'inhibition INB à destination du régulateur de courant 24. Lorsque le signal d'inhibition INB est actif, alors le régulateur de courant 24 force le signal de pilotage 25 de façon à commander l'ouverture du commutateur 44.

Le module 33 sélectionne le mode de marche "stand-by" lorsque le signal 47 indique qu'aucun courant de charge ne circule, c'est-à-dire quand il détecte qu'il n'y a pas de charge moteur. On pourrait aussi envisager de façon équivalente que l'information de détection d'absence de charge moteur reçue par le module régulateur de tension 33 soit effectuée par d'autres moyens (par exemple par une détection de moteur arrêté).

Lorsque le signal 47 indique qu'un courant de charge est présent, le module 33 sélectionne le mode de marche "normal" de façon à réguler l'ouverture et la fermeture du commutateur 44 comme décrit précédemment.

Il est bien entendu que l'on peut, sans sortir du cadre de l'invention, telle que définie dans les revendications annexées, imaginer d'autres variantes et perfectionnements de détail et de même envisager l'emploi de moyens équivalents.

**Revendications**

1. Variateur de vitesse pour moteur électrique triphasé (M), comportant :

   - un module redresseur (10) fournissant une tension redressée (15) à partir d'un réseau électrique monophasé alternatif (5),
   - un module élévateur de tension (40) fournissant une tension de bus régulée (45) à partir de ladite tension redressée (15),
   - un module onduleur (50) alimenté par ladite tension de bus (45) et fournissant une tension de commande au moteur électrique triphasé (M) à partir d'une consigne de commande,
   - une unité de traitement numérique fournissant ladite consigne de commande,

   **caractérisé en ce que** le variateur de vitesse comprend un dispositif hybride de correction de facteur de puissance qui pilote le module élévateur de tension (40) et qui comporte :

   - un circuit numérique (30) doté d'un module régulateur de tension (33) fournissant un signal de correction (35) à partir d'un signal de mesure (46) de ladite tension de bus,

- un circuit analogique (20) fournissant un signal de pilotage (25) au module élévateur (40) à partir d'un signal de mesure (12) de ladite tension redressée et à partir dudit signal de correction (35), le circuit analogique (20) comportant un circuit limiteur (21) recevant en entrée le signal de mesure (12) de ladite tension redressée et générant en sortie un signal écrêté (26) de forme sensiblement trapézoïdale.

2. Variateur de vitesse selon la revendication 1, **caractérisé en ce que** le circuit numérique (30) est intégré dans ladite unité de traitement.

3. Variateur de vitesse selon la revendication 1, **caractérisé en ce que** le signal de correction (35) est un signal à modulation de largeur d'impulsions PWM.

4. Variateur de vitesse selon la revendication 1, **caractérisé en ce que** le module élévateur (40) comprend un commutateur statique (44) actionné par ledit signal de pilotage (25).

5. Variateur de vitesse selon la revendication 1, **caractérisé en ce que** le circuit limiteur (21) comporte un pont diviseur de résistances (R1, R2) et une diode de limitation (D1) dont l'anode est connectée à un point milieu du pont diviseur.

6. Variateur de vitesse selon la revendication 1, **caractérisé en ce que** le circuit analogique (20) comporte un circuit de commutation (22) recevant en entrée ledit signal écrêté (26) et ledit signal de correction (35) pour générer un signal de référence courant (28).

7. Variateur de vitesse selon la revendication 6, **caractérisé en ce que** le circuit analogique (20) comporte un régulateur de courant (24) qui est un régulateur simple du type à hystérésis et qui reçoit en entrée ledit signal de référence courant (28) et un signal de mesure (13) de courant pour délivrer en sortie ledit signal de pilotage (25) au commutateur (44).

8. Variateur de vitesse selon la revendication 1, **caractérisé en ce que** le module régulateur de tension (33) force le régulateur de courant (24) à délivrer un signal de pilotage (25) ordonnant l'ouverture du commutateur (44) en cas d'absence de courant de charge du variateur.

9. Variateur de vitesse selon la revendication 8, **caractérisé en ce que** le circuit numérique (30) reçoit un signal de mesure (47) représentatif du courant de charge du variateur.

**Claims**

1. Variable speed drive for three-phase electric motor (M), comprising:

   - a rectifier module (10) supplying a rectified voltage (15) from a single-phase alternating current electrical network (5),
   - a voltage step-up module (40) supplying a regulated bus voltage (45) from said rectified voltage (15),
   - an inverter module (50) powered by said bus voltage (45) and supplying a control voltage to the three-phase electric motor (M) from a control set-point,
   - a digital processing unit supplying said control set-point,

   **characterized in that** the variable speed drive comprises a hybrid power-factor correction device which drives the voltage step-up module (40) and which comprises:

   - a digital circuit (30) provided with a voltage regulator module (33) supplying a correction signal (35) from a measurement signal (46) of said bus voltage,
   - an analogue circuit (20) supplying a driver signal (25) to the step-up module (40) from a measurement signal (12) of said rectified voltage and from said correction signal (35), the analogue circuit (20) comprising a limiter circuit (21) receiving as input the measurement signal (12) of said rectified voltage and generating as output a clipped signal (26) of roughly trapezoidal form.

2. Variable speed drive according to Claim 1, **characterized in that** the digital circuit (30) is incorporated in said processing unit.

3. Variable speed drive according to Claim 1, **characterized in that** the correction signal (35) is a pulse width modulation PWM signal.

4. Variable speed drive according to Claim 1, **characterized in that** the step-up module (40) comprises a solid-state switch (44) actuated by said driver signal (25).

5. Variable speed drive according to Claim 1, **characterized in that** the limiter circuit (21) comprises a resistor divider bridge (R1, R2) and a limiting diode (D1), the anode of which is connected to a mid-point of the divider bridge.

6. Variable speed drive according to Claim 1, **characterized in that** the analogue circuit (20) comprises a switching circuit (22) receiving as input said clipped signal (26) and said correction signal (35) to generate a current reference signal (28).

7. Variable speed drive according to Claim 6, **characterized in that** the analogue circuit (20) comprises a current regulator (24) which is a simple hysteresis-type regulator and which receives as input said current reference signal (28) and a current measurement signal (13) to deliver as output said driver signal (25) to the switch (44).

8. Variable speed drive according to Claim 1, **characterized in that** the voltage regulator module (33) forces the current regulator (24) to deliver a driver signal (25) ordering the switch (44) to open in the absence of variable speed drive load current.

9. Variable speed drive according to Claim 8, **characterized in that** the digital circuit (30) receives a measurement signal (47) representative of the variable speed drive load current.

**Patentansprüche**

1. Umrichter für einen Dreiphasen-Elektromotor (M), der aufweist:

    - ein Gleichrichtermodul (10), das ausgehend von einem einphasigen Wechselstromnetz (5) eine gleichgerichtete Spannung (15) liefert,
    - ein Spannungserhöhungsmodul (40), das ausgehend von der gleichgerichteten Spannung (15) eine geregelte Busspannung (45) liefert,
    - ein Wechselrichtermodul (50), das mit der Busspannung (45) versorgt wird und ausgehend von einem Steuersollwert eine Steuerspannung an den Dreiphasen-Elektromotor (M) liefert,
    - eine digitale Verarbeitungseinheit, die den Steuersollwert liefert,

    **dadurch gekennzeichnet, dass** der Umrichter eine hybride Leistungsfaktor-Korrekturvorrichtung enthält, die das Spannungserhöhungsmodul (40) steuert und aufweist:

    - eine mit einem Spannungsreglermodul (33) versehene digitale Schaltung (30), die ausgehend von einem Messsignal (46) der Busspannung ein Korrektursignal (35) liefert,
    - eine analoge Schaltung (20), die ausgehend von einem Messsignal (12) der gleichgerichteten Spannung und ausgehend von dem Korrektursignal (35) ein Steuersignal (25) an das Erhöhungsmodul (40) liefert, wobei die analoge Schaltung (20) eine Begrenzerschaltung (21) aufweist, die am Eingang das Messsignal (12) der gleichgerichteten Spannung empfängt und am Ausgang ein im Wesentlichen trapezförmiges Spitzenwert-begrenztes Signal (26) erzeugt.

2. Umrichter nach Anspruch 1, **dadurch gekennzeichnet, dass** die digitale Schaltung (30) in die Verarbeitungseinheit integriert ist.

3. Umrichter nach Anspruch 1, **dadurch gekennzeichnet, dass** das Korrektursignal (35) ein Signal mit Impulsbreitenmodulation PWM ist.

4. Umrichter nach Anspruch 1, **dadurch gekennzeichnet, dass** das Erhöhungsmodul (40) einen statischen Schalter (44) enthält, der vom Steuersignal (25) betätigt wird.

5. Umrichter nach Anspruch 1, **dadurch gekennzeichnet, dass** die Begrenzerschaltung (21) eine Widerstandsteilerbrücke (R1, R2) und eine Begrenzungsdiode (D1) aufweist, deren Anode mit einem Mittelpunkt der Teilerbrücke verbunden ist.

6. Umrichter nach Anspruch 1, **dadurch gekennzeichnet, dass** die analoge Schaltung (20) einen Schaltkreis (22) aufweist, der am Eingang das Spitzenwert-begrenzte Signal (26) und das Korrektursignal (35) empfängt, um ein Stromreferenzsignal (28) zu erzeugen.

7. Umrichter nach Anspruch 6, **dadurch gekennzeichnet, dass** die analoge Schaltung (20) einen Stromregler (24) aufweist, der ein einfacher Regler von der Art mit Hysterese ist und der am Eingang das Stromreferenzsignal (28) und ein Strommesssignal (13) empfängt, um am Ausgang das Steuersignal (25) an den Schalter (44) zu liefern.

8. Umrichter nach Anspruch 1, **dadurch gekennzeichnet, dass** das Spannungsreglermodul (33) den Stromregler (24) zwingt, ein Steuersignal (25) zu liefern, das das Öffnen des Schalters (44) im Fall eines nicht vorhandenen Laststroms des Reglers befiehlt.

9. Umrichter nach Anspruch 8, **dadurch gekennzeichnet, dass** die digitale Schaltung (30) ein Messsignal (47) empfängt, das für den Laststrom des Reglers repräsentativ ist.

FIG. 1

FIG. 2

*FIG. 3*

*FIG. 4*

**FIG. 5**

**FIG. 6**

**FIG. 7**

**FIG. 8**

**EP 1 788 697 B1**

**RÉFÉRENCES CITÉES DANS LA DESCRIPTION**

**Documents brevets cités dans la description**

- US 6373734 B